# EUROPÄISCHE PATENTSCHRIFT

(11) **EP 2 871 194 B1**
(45) Veröffentlichungstag und Bekanntmachung des Hinweises auf die Patenterteilung: **03.08.2016**
(21) Anmeldenummer: 13192537.2
(22) Anmeldetag: 12.11.2013
(51) Int. Cl.: C08G 18/50, C08G 18/72, C08G 18/09, C08G 18/10, C08G 18/22, C09J 175/08

(54) **Zwei-Komponenten-Klebstoff**
Dual component adhesive
Colle à deux composants

(43) Veröffentlichungstag der Anmeldung: 13.05.2015
(73) Patentinhaber: nolax AG, 6203 Sempach Station (CH)
(72) Erfinder: Buser Stephan, 6210 Sursee (CH)
(74) Vertreter: Hepp Wenger Ryffel AG

(56) Entgegenhaltungen:
- US-A- 5 175 228

## Beschreibung

Die Erfindung betrifft einen Zwei-Komponenten-Klebstoff und ein Zwei-Komponenten-Klebstoff-System gemäss dem Oberbegriff der unabhängigen Ansprüche.

Polyurethane (PUR) sind eine häufig verwendete Basis für strukturelle Klebstoffe und entstehen die Reaktion von Di- bzw. Polyalkoholen mit Polyisocyanaten. Polyurethanklebstoffe erreichen typischerweise eine Festigkeit zwischen 15-25 MPa bei relativ grosser Härte und Sprödigkeit.

Ebenfalls bekannt sind Klebstoffe auf Basis von Polyharnstoff bzw. Polyurea; bei deren Herstellung wird im Gegensatz zu PUR die Polyolkompononente durch Polyamine ersetzt. Die Reaktion zwischen den Amingruppen und den Isocyanaten verläuft ungefähr um eine Grössenordnung schneller ab als diejenige zwischen den Hydroxylgruppen der Polyol-Komponenten und den Isocyanten der Polurethan-Klebstoffe. Entsprechend wird die Ureabildung im Unterschied zur Urethanbildung von einer Freisetzung von Wärmeenergie begleitet. Klebstoffe auf Basis von Polyurea besitzen ähnliche Eigenschaften wie Polyurethanklebstoffe hinsichtlich der relativ grossen Härte und Sprödigkeit.

Bekannt ist die Bildung von trimeren heterocyclischen Isocyanuraten zu Polyisocanuraten (PIR) bei Verwendung von Trimerisierungskatalysatoren. Zwei-Komponenten-Klebstoffe basierend auf der Bildung eines Polyisocyanurats sind ebenfalls bekannt. Sie nutzen die Reaktion eines Isocyanats mit isocyanatreaktivem Wasserstoff, beispielsweise eines Polyols oder Polyamins, unter Einsatz eines Katalysators. EP 2 137 224 B1 beschreibt einen solchen Zwei-Komponenten-Klebstoff. Zur Aushärtung sind auch bei Anwesenheit von entsprechenden Katalysatoren hohe Temperaturen notwendig, was ein Aufheizen der Klebestelle und/oder eine temporäre Lagerung in einem Heizofen erfordert. Daher sind dem Einsatz von Polyisocyanuratbasierenden Zwei-Komponenten-Klebstoffen bislang anwendungstechnische Grenzen gesetzt.

Es ist daher Aufgabe der Erfindung, die Nachteile des Standes der Technik zu überwinden. Insbesondere soll eine Klebstoffzusammensetzung zur Verfügung gestellt werden, welche besser handhabbar, breiter anwendbar sowie nach Aushärtung fest und dabei dennoch wenig spröde ist.

Diese Aufgaben werden durch die in den unabhängigen Ansprüchen definierten Merkmale gelöst.

Die Erfindung betrifft einen Zwei-Komponenten-Klebstoff umfassend eine erste Komponente (A) und eine zweite Komponente (B).

Komponente A enthält ein monomeres Polyisocyanat, insbesondere monomeres Diisocyanat, und ein isocyanat-terminiertes Präpolymer und/oder ein Präpolymergemisch mit einer Isocyanatfunktionalität ≥ 1.7, bevorzugt im Bereich von 1.7 < f_{NCO} < 3, besonders bevorzugt im Bereich von 2 < f_{NCO} < 3.

Besonders bevorzugt ist das Isocyanat-terminierte Präpolmer und/oder Präpolymergemisch bei Raumtemperatur (20 °C) flüssig oder pastös, jedenfalls nicht fest. Unter Raumtemperatur wird hier und im Weiteren 20° verstanden. Der Isocyanatgehalt des Präpolymers und/oder Präpolymergemisches beträgt insbesondere 6-33 Gew.-%, vorzugsweise 8-25 Gew.-%.

Die Komponente B enthält ein Di- und/oder Polyamin, vorzugsweise ein Polyetherdiamin und/oder ein Polyetherpolyamin, sowie mindestens einen Trimerisierungskatalysator.

Das stöchiometrische Verhältnis von Isocyanatgruppen in der ersten Komponente (A) zu in der Zusammensetzung enthaltenen isocyanat-reaktiven Wasserstoffatomen, insbesondere reaktiven Wasserstoffatomen eines Amins, in der zweiten Komponente (B) beträgt 7.5 bis 25, bevorzugt 10 bis 20, besonders bevorzugt 15.

In bevorzugten Ausführungsformen wird das monomere Diisocyanat der Komponente A im vorgängig beschriebenen Überschuss eingesetzt.

Besonders bevorzugt ist die Komponente B, insbesondere das Di- und/oder Polyamin, vorzugsweise das Polyetherdiamin und/oder das Polyetherpolyamin, bei Raumtemperatur flüssig oder pastös, jedenfalls nicht fest. Weiter kann die Komponente B Polyole zur Modifikation der Schlagzähigkeit des ausreagierten Klebstoffes enthalten, sowie weitere Additive wie z.B. Netzmittel, Stabilisatoren, Farbstoffe, Füllstoffe, Wasserfänger.
Auf die Anwesenheit eines isocyanat-terminierten Präpolymers und/oder eines Präpolymergemisches in Komponente A kann verzichtet werden. Stattdessen kann Komponente A die Reaktanten (Di-/Polyisocyanate einerseits und Di-/Polyole und/oder Di-/Polyamine andererseits) für die Bildung eines isocyanat-terminierten Präpolymers und/oder Präpolymergemisches enthalten.

Es wird somit ein Zwei-Komponenten-Klebstoff bereitgestellt, bei welchem in einem ersten Schritt über eine Reaktion des im Überschuss vorhandenen monomeren Polyisocyanats (insbesondere des Diisocyanats) mit dem Polyamin ein zweites Präpolymer gebildet wird. Diese Reaktion ist stark exotherm. Gleichzeitig erfolgt eine Vernetzung des isocyanat-terminierten Präpolymers der Komponente A durch in der Komponente B bereitgestellte Amine. Im weiteren Reaktionsverlauf kommt es unter dem Einfluss von einschlägigen Katalysatoren, insbesondere Kaliumoctoat, vorwiegend zu einer Trimerisierung der vorhandenen Isocyanatgruppen. So weist der erfindungsgemässe Zwei-Komponenten-Klebstoff im Vergleich zu bekannten Polyurethan- und Polyurea-Klebstoffen sowohl höhere Zugfestigkeit und Wärmebeständigkeit als auch eine höhere Schlagzähigkeit auf als andere hochfeste Klebstoffe wie beispielsweise Epoxidharze.

In besonders bevorzugten Ausführungsformen handelt es sich bei dem Isocyanat-terminierten Präpolymer oder Präpolymergemisch in Komponente A um ein Polyurethan- oder Polyharnstoff-Präpolymer, ggf. in Abmischung mit weiteren Isocyanaten, bspw. monomeren Diisocyanaten, polymeren Isocyanaten, oder monofunktionellen Isocyanaten. Wie vorstehend bereits erwähnt, kann zwar auf die Anwesenheit von Präpolymeren vollständig verzichtet werden und stattdessen die entsprechenden Reaktanten (Di-/Polyisocyanate einerseits und Di-/Polyole und/oder Di-/Polyamine andererseits) zur Erzeugung eines Präpolymeren in der Komponente A enthalten sein. Der Einsatz von Polyurethanpräpolymeren bzw. Polyurethanpräpolymergemischen ist im Rahmen der Erfindung jedoch bevorzugt: Hierdurch kann die aus dem vorstehend diskutierten Stand der Technik bekannte, gute Adhäsion von Polyurethan-Zusammensetzungen weiter genutzt werden.

Nachfolgend werden einzelne Bestandteile erfindungsgemässer Zusammensetzungen näher erläutert.

### ISOCYANATE

Polyisocyanate sind essentiell für die Herstellung von Polyurethanen und Polyharnstoffen. Die generelle Summenformel von Polyisocyanaten ist R-(NCO)ₙ, mit n ≥ 2, und wobei R eine aromatische oder aliphatische Gruppe bedeutet. Mit Hydroxylgruppen abreagierende Polyisocyanate bilden Polyurethane, mit Amingruppen abreagierende Polyisocyanate bilden Polyharnstoffe.

Als Polyisocyanate werden bevorzugt Diisocyanate verwendet, besonders bevorzugt ausgewählt aus der Gruppe bestehend aus 4,4'-Methylenebis(phenylisocyanat) (MDI); Toluoldiisocyanat (TDI); m-Xylylendiisocyanate (XDI); Hexamethylendiisocyanate (HDI); Methylenbis-(4-cyclohexyldiisocyanate) (HDMI); Naphtalin-1,5,-diisocyanate (NDI); 3,3'-Dimethyl-4,4'-biphenyldiisocyanate (TODI); 1,4-Diisocyanatbenzol (PPDI) Phenyl-1,4-4-diisocyanate; Trimethylhexamethyldiisocyanate (TMDI); Isophorondiisocyanate (IPDI); 1,4-Cyclohexyldiisocyanat (CHDI); Diphenylether-4,4'-diisocyanat; p,p'-Diphenyldiisocyanat; Lysindiisocyanate (LDI); 1,3-Bis(isocyanatmethyl)cyclohexan; Polymethylpolyphenylisocyanat (PMDI); und Isomere und/oder Mischungen davon.

Besonders bevorzugt sind MDI und polyMDI Mischungen. Normalerweise enthalten methylenverbrückte
Polyphenylpolyisocyanat-Mischungen etwa 20 bis etwa 100 Gewichtsprozent MDI Isomere (typischerweise etwa 20 bis etwa 95 Gewichtsprozent davon entfallen auf das 4,4'-Isomer), wobei der verbleibende Rest von Polymethylenepolyphenylisocyanaten mit höherer Funktionalität (typischerweise etwa zwischen 2.1 und 3.5) und höherem Molekulargewicht gebildet wird. Derartige Isocyanat-Mischungen sind kommerziell erhältlich und/oder können gemäss dem in US 3,362,979 leicht hergestellt werden.

Die Isocyanate können selbstverständlich in Form von höheren Homologen eingesetzt werden, bspw. als Isocyanurat, Carbodiimid, Allophanat, Biuret, Iminooxadiazindion, Uretonimin oder Uretdion.

### PRÄPOLYMERE

### Polyurethan-Präpolymere

Zur Herstellung von Polyurethan-Präpolymeren werden Polyole mit den vorstehend genannten Isocyanaten zur Reaktion gebracht. Geeignete Polyole sind dem Fachmann geläufig. Sie haben im Rahmen der Erfindung typischerweise ein Molekulargewicht von etwa 500 bis etwa 6.000 und/oder zwei bis vier Hydroxylgruppen. Besonders bevorzugte Polyole sind Polyester, Polyether, Polythioether, Polyacetale und Polycarbonate mit jeweils zwei bis vier Hydroxylgruppen. Bevorzugte Polyether im Rahmen der Erfindung sind dem Fachmann an sich bekannt und können bspw. hergestellt werden durch Polymerisierung von Epoxiden wie Ethylenoxid, Propylenoxid, Butylenoxid, Tetrahydrofuran, Styroloxid oder Epi-chlorhydrin in Gegenwart von BF₃, oder durch Addition von Epoxiden, insbesondere von Ethylenoxid oder Propylenoxid an reaktive Wasserstoffe enthaltende Moleküle wie bspw. Wasser, Alkohol oder Amine (bspw. niedermolekulare Diole, Triole oder Tetrole; 4,4'-Dihydroxydiphenylpropan; Anilin; Ammoniak; Ethanolamin; Ethylendiamin). Polypropylenglykol und Polytetramethylenglykol (PTMG oder PTMEG) sind gegenwärtig bevorzugt.

In der Präpolymer-Herstellung können auch an sich bekannte Kettenverlängerer eingesetzt werden, insbesondere Di-/Polyole von niedrigem Molekulargewicht (typischerweise kleiner als 400g/mol). Genannt werden insbesondere Ethylenglykol, Propylenglykol, Butanglykol, Pentanglykol, Hexanglykol, Benzylglykol, Xylolglykol, Wasser, 1,4-Butandiol, 1,3-Butandiol, 2,3-Dimethyl-2,3-Butandiol, Dipropylenglykol und Tripropylenglycol, Di- und Triethlylenglykol, N-N'-bis-(2-Hydroxy-propylanilin) (DHPA), 1,4-di-(2-Hydroxyethyl)hydrochinon (HQEE), Diethanolamin, Triethanolymin, Trimethylolpropan, Glycerin.

Polyalkenylpolyole, Polyetherpolyole oder Polyesterpolyole oder gemischte Polyesterpolyetherpolyole mit vorzugsweise 2 oder 3 Hydroxylendgruppen können mit einem wohldefinierten Überschuss an Isocyanate zu NCO-terminierten Urethanprepolymeren umgesetzt werden. Sie sind auch im Handel erhältlich bspw. von der BAYER AG z. B. unter den Handelsmarken Desmodur® E22 oder E23. Destillierte Produkte, bei denen die Entfernung des überschüssigen Diisocyanates zu F_{NCO} = 2 führt, sind ebenfalls bekannt und können verwendet werden.

### Polyharnstoff-Präpolymere

Zur Herstellung von Polyharnstoff-Präpolymeren werden in an sich bekannter Art und Weise Polyamine mit ≥ 2 Amingruppen mit einem wohldefinierten Überschuss an di- oder polyfunktionellen Isocyanat-Verbindungen zu NCO-terminierten Harnstoff-Präpolymeren umgesetzt.

Polyharnstoff-Präpolymere sind jedoch im Rahmen der Erfindung gegenüber Polyurethan-Präpolymeren weniger bevorzugt, da sie zur Gelierung bei Raumtemperatur aufgrund von Wasserstoffbrückenbindungen neigen.

### AMINE

### Polyetherpolyamine

Als polymere Polyaminkomponente können vorzugsweise Verbindungen mit einer Funktionalität von 2 bis 4 eingesetzt werden, wobei insbesondere mehr als 50 % der aktiven Wasserstoffatome von primären oder sekundären Aminen gebildet werden. Insbesondere werden genannt: Polyoxyalkylenamine wie bspw. Polyoxypropylendiamine, Polyoxyethylendiamine, Polytetramethylenetherdiamine, Polyoxypropylentriamine, Polyoxyethylentriamine (bekannt unter dem Handelsnamen Jeffamine® von Huntsman); sowie, falls aromatische Komponenten tolerabel für eine spezifische Anwendung sind:
Polyethyleneglykol-di(p-aminobenzoat); Polyethyleneglykol-di(o-aminobenzoat); Polyethyleneglykol-di(m-aminobenzoat);
Polytetramethyleneglykol-di(p-aminobenzoat);
Polytetramethyleneglykol-di(o-aminobenzoat);
Polytetramethyleneglykol-di(m-aminobenzoat). Als Polyamine können Polyethylenoxid-Polypropylenoxidpolyether eingesetzt werden, insbesondere mit einer Funktionalität von ungefähr zwei bis ungefähr drei und/oder mit einem Molekulargewicht von ungefähr 200g/mol bis ungefähr 6.000g/mol (beschrieben bspw. in US 4,433,067). Selbstverständlich können auch Mischungen Aminterminierter Polyether im Rahmen der Erfindung verwendet werden.

Vorzugsweise werden Polyoxyalkylendiamine mit einem mittleren Molekulargewicht im Bereich von etwa 150 g/mol bis etwa 7500 g/mol, vorzugsweise im Bereich von etwa 250 g/mol bis etwa 6000 g/mol eingesetzt.

### Amine als Kettenverlängerer

Im Rahmen der Erfindung können auch aminische Kettenverlängerer eingesetzt werden, vorzugsweise mit einem Molekulargewicht typischerweise kleiner als 400g/mol. Genannt werden insbesondere aliphatische Diamine, wie bspw. in US 4,246,363 und US 4,269,945 beschrieben. Ebenso kann ein kettenverlängerndes aliphatisches Diamin ausgewählt sein aus der Gruppe bestehend aus Ethylendiamin; Neopentandiamin; 1,2- und 1,3-Propandiamin; 1,6-Hexamethylendiamin; 1,8-Octamethylendiamin; 1,12-Dodecamethylendiamin; Cyclohexyldiamin; 4,4'-bis(para-amino-cyclohexyl)methan; 2,2'-dimethyl-4,4'-methylenbis(cyclohexylamine) (Dimethyldicyclan); Isophorondiamin; 4,7-Dioxadecan-1,10-diamin; 4,7,10-Trioxadecan-1,13-diamin, Tetramethylethylendiamin; Pentamethyldiethylenetriamin; Dimethylcyclohexylamin; Tetramethyl-1,3-butandiamin; Pentamethyldipropylentriamin; bis-(Dimethylaminoethylether)triethylenglykoldiamin; 4,4'-Methylene-bis-(2-ethyl-6-methylcyclohexylamin) (M-MECA); 4,4'-Methylen-bis-(2,6-diethylcyclohexylamin) (MDECA); 4,4'-Bis(sek-butylamino)-dicyclohexylmethan (im Handel erhältlich als Clearlink® 1000) und Monomere davon; 3,3'-Dimethyl-4,4'-bis(sek-butylamino)-dicyclohexylmethane (im Handel erhältlich als Clearlink® 3000) und Monomere davon; N,N'-Diisopropylisophorondiamin (im Handel erhältlich als Jefflink® 754); Amine der Aspartamsäure wie z.B. s N,N'-Diethylmaleat-2-methylpentamethylendiamin (im Handel erhältlich als Desmophen® NH-1220), N,N'-Diethylmaleat-amino)-dicyclohexylmethan (im Handel erhältlich als Desmophen® NH-1420), und N,N'-Diethylmaleatamino)-dimethyl-dicyclohexylmethan (im Handel erhältlich als Desmophen® NH-1520).

Auch aromatische Diamine (wie bspw. beschrieben in US 4,659,747) können im Rahmen der Erfindung als Kettenverlängerer eingesetzt werden. Konkret werden genannt: Dimethylbenzylamin; Diethylbenzylamin; 1,2-Dimethylimidazol; 2-Methylimidazol; 1,2-, 1,3- oder 1,4-Bis(sek-butylamino)benzol (im Handel erhältlich als Unilink® 4100); 4,4'-Bis(sek-butylamino)-diphenylmethan (im Handel erhältlich als Unilink® 4200); Trimethylenglykol-di(p-aminobenzoat) (im Handel erhältlich als Versalink 740M); Trimethylenglykol-di(o-aminobenzoat); Trimethylenglykol-di(m-aminobenzoat); Polyethylenglykol-di(p-aminobenzoat); Polyethyleneglykol-di(o-aminobenzoat); Polyethylenglykol-di(m-aminobenzoat); Polytetramethylenglykol-di(p-aminobenzoat); Polytetramethyleneglykol-di(o-aminobenzoat); Polytetramethylenglykol-di(m-aminobenzoat); aromatische Diamine wie z.B. 3,5-Diethyl-2,4-toluoldiamin and 3,5-Diethyl-2,6-toluoldiamin (im Handel erhältlich als Ethacure® 100) und 3,5-Dimethylthio-2,4-toluoldiamin and 3,5-Dimethylthio-2,6-toluoldiamin (im Handel erhältlich als Ethacure® 300); 4,4'-Methylen-bis(2-chloroanilin); Diethylentriamine; Triethylentetramine; Tetraethylenpentamin; Methylendianilin (MDA); m-Phenylendiamin; Diethyltoluoldiamin; 4,4'-methylen-bis-3-(chloro-2,6-diethylbenzylamin) (MCDEA); Diethyltololdiamine (DETDA); 4,4'-Methylen-bis-(2-ethyl-6-methylaniline) (NMMEA); 4,4'-Methylen-bis-(2,6-diethylanilin) (MDEA); 4,4'-Methylen-bis-(2-isopropyl-6-methylanilin) (MMIPA); 4,4'-bis(sekbutylamino)diphenyl-methane; Phenylendiamine; Methylen-bisortho-chloroanilin (MBOCA); 4,4'-Methylene-bis-(2-methylanilin) (MMA); 4,4'-Methylen-bis-(2-chloro-6-ethylanilin) (MCEA);); 1,2-bis(2-aminophenylthio)ethan; N,N'-Di-alkyl-p-phenylendiamin; 4,4'-Methylen-bis(2,6-diisopropylanilin) (MDIPA); und Dimethylthiotoluoldiamin (2,4 und 2,6-Isomere) (DMTDA); 4-Chloro-3,5-diaminobenzoesäureisobutylester (CDABE) sowie Mischungen davon.

Das Mischungsverhältnis der vorgenannten Kettenverlängerer mit den Polyaminen kann vom Fachmann leicht in Routineversuchen abgestimmt werden auf das gewünschte Verhältnis von Hart- und Weichsegmenten. Hierbei sind die fachüblichen Anforderungen an die Mischbarkeit der Komponenten zu beachten.

Die vorstehend genannten primären Polyamine können im Rahmen der Erfindung fachüblich weiter modifiziert werden, bspw. mit Epoxiden (US 6,723,821), mit Acrylaten (über eine Michael-Addition, wie bspw. in US 5,359,123 und US 5,192,814 beschrieben) oder auch mit Alkoxysilanen (vorzugsweise mit Aminosilanen, wie bspw. in WO02059224 beschrieben) sowie mit Isocyanatosilanen, Epoxy-Silanen oder Acrylato-Silanen.

Durch den Einbau der Alkoxysilylverbindungen in die Isocyanat- und/oder Aminkomponente können diese 2K Polyharnstoff-Klebstoffe mit einem verbesserten Eigenschaftsprofil hinsichtlich Haftung, Wasser-, oder Säurebeständigkeit ausgestattet werden.

Besonders bevorzugte Amine in der Komponente B sind Polyoxypropylendiamine, vorzugsweise mit einem mittleren Molekulargewicht von etwa 2000 g/mol (im Handel erhältlich bspw. unter dem Handelsnamen Jeffamine® D-2000 gemäss CAS 9046-10-0; Huntsman Corporation, Houston, Texas); primäre, verzweigte Polyethertriamine, vorzugsweise mit einem mittleren Molekulargewicht von etwa 5000 g/mol (im Handel erhältlich bspw. unter dem Handelsnamen Jeffamine® T-5000 gemäss CAS 64852-22-8; Huntsman Corporation, Houston, Texas (USA)); substituierte, insbesondere aromatische Diamine wie bspw. Diethyltoluylendiamin (im Handel erhältlich unter dem Handelsnamen Härter DT bzw. Härter VP LS 2214; Bayer AG, Leverkusen (DE)) oder N,N'-Dialkylaminodiphenylmethan (im Handel erhältlich unter dem Handelsnamen Unilink™ 4200 Diamine; UOP GmbH, Erkrath (DE)).

### TRIMERISIERUNGSKATALYSATOREN

Als erfindungsgemässe Trimerisierungskatalysatoren können insbesondere Metallsalze einer Carbonsäure, bevorzugt Kaliumoctoat und Kaliumacetat, Phosphine, Natriumhydroxid, Kaliumhydroxid, quarternäre Ammoniumsalze, 2,4,6-Tris(dimethylaminomethyl)phenol und/oder Mischungen von Katalysatoren wie beispielsweis Jeffcat TR® (Huntsman) verwendet werden.

Weitere Aspekte der Erfindung werden nachfolgend dargelegt.

Die Funktionalität der NCO-terminierten Präpolymere, insbesondere der Urethanpräpolymere ist ≥ 1.7, vorzugsweise von 1.7 < F_{NCO} < 3, besonders bevorzugt im Bereich von 2 bis 3. Funktionalitäten > 2 erklären sich sowohl durch zusätzlich vorliegende, freie Isocyanate als auch durch Allophanatgruppen, welche durch Reaktion von Urethangruppen mit weiteren NCO-Einheiten entstehen können; derartige Präpolymere werden daher in der Fachwelt oftmals auch "Quasi-Präpolymere" genannt. Allophanatgruppen in Komponente A werden bei der weiteren Umsetzung mit Komponente B wieder in ein Urethan und freies Isocyanat gespalten.

In bevorzugten Ausführungsformen beträgt das stöchiometrische Verhältnis von Isocyanatgruppen in Komponente A zu in der Zusammensetzung enthaltenen isocyanat-reaktiven Wasserstoffatomen, insbesondere reaktiven Wasserstoffatomen des Di- und/oder Polyamins, in Komponente B etwa 7.5 bis etwa 25, vorzugsweise etwa 10 bis etwa 20, besonders bevorzugt etwa 15.

Über die Auswahl und ggf. Kombination verschiedener Di- oder Polyamine kann der Fachmann in Kenntnis der Erfindung leicht in Routineversuchen wesentliche Eigenschaften des Zwei-Komponenten Klebstoffs ausschliesslich über die Komponente B einstellen, wie z.B. die Elastizität, Wasserfestigkeit, Reaktionsgeschwindigkeit, etc.; die Komponente A kann hingegen beibehalten werden, was sowohl produktionsseitig beim Hersteller als auch in der Bereitstellung beim Verbraucher erhebliche Flexibilität ermöglicht (System mit verschiedenen Komponenten B, siehe unten).

Die erfindungsgemässen Zusammensetzungen können selbstverständlich die fachüblichen weiteren Additive enthalten, wie sie in der Polyurethan/Polyharnstoffindustrie allgemein üblich sind. Zum Beispiel: Weichmacher, beispielsweise Ester organischer Carbonsäuren oder deren Anhydride, Phthalate, wie beispielsweise Dioctylphthalat oder Diisodecylphthalat, Adipate, wie zum Beispiel Dioctyladipat, Sebacate, organische Phosphor- und Sulfonsäureester, Polybutene und andere, mit Isocyanaten nicht reagierende Verbindungen; Lösemittel; anorganische und organische Füllstoffe, wie zum Beispiel gemahlene oder gefällte Calciumcarbonate, welche gegebenenfalls mit Stearaten beschichtet sind, Russe, Kaoline, Aluminiumoxide, Kieselsäuren und PVC-Pulver; Fasern, beispielsweise aus Polyethylen oder aus Polyamide; Pigmente; Rheologie-Modifizierer wie beispielsweise Verdickungsmittel, zum Beispiel Harnstoffverbindungen, Polyamidwachse, Bentonite oder pyrogene Kieselsäuren; Haftvermittler, insbesondere Silane wie Vinylsilane, Isocyanatosilane in der Isocyanatekomponente und mit Aldehyden zu Aldiminosilanen umgesetzte Aminosilane in der Aminekomponente; Trocknungsmittel wie beispielsweise p-Tosylisocyanat und andere reaktive Monoisocyanate, Vinyl Trimethoxysilan, Orthoameisensäureester, Calciumoxid oder Molekularsiebe (z.B. Zeolite); Stabilisatoren gegen Wärme, Licht- und UV-Strahlung; flammhemmende Substanzen; oberflächenaktive Substanzen wie beispielsweise Netzmittel, Verlaufsmittel, Entlüftungsmittel oder Entschäumer; Fungizide oder das Pilzwachstum hemmende Substanzen; sowie weitere, in der Polyurethanindustrie üblicherweise eingesetzte Substanzen.

Bezüglich solcher Additive wird verwiesen auf Polyurethane Handbook 2nd edition, Günter Oertel (Editor), Hanser Publishers Munich 1994, Seiten 98 bis 128, dessen Offenbarung hinsichtlich fachüblicher Additive wird hiermit durch Bezugnahme in die Offenbarung der vorliegenden Erfindung eingeschlossen.

Als Substrate kommen vorrangig in Betracht: Metalle, Glas, Keramik, Kunststoffe, Holzwerkstoffe, Textilien. Vorteile sind im Bereich von Metallverklebungen zu finden, da die Zusammensetzungen verbesserte Wärmestandfestigkeit und generell höhere Festigkeiten bei Raumtemperatur vermitteln.

Des Weiteren betrifft die Erfindung ein System zur individualisierten Bereitstellung eines Zwei-Komponenten-Klebstoffes umfassend eine Komponente A mit einem monomerem Polyisocyanat, insbesondere monomerem Diisocyanat, und einem isocyanat-terminiertem Präpolymer und/oder Präpolymergemisch mit einer Isocyanatfunktionalität von ≥ 1.7, vorzugsweise von 1.7 < f_{NCO} < 3, besonders bevorzugt im Beriech von 2 < f_{NCO} < 3, und mit wenigstens zwei alternativen Komponenten B umfassend jeweils ein unterschiedliches Di- und/oder Polyamin, vorzugsweise ein Polyetherdiamin und/oder ein Polyetherpolyamin, sowie mindestens einen Trimerisierungskatalysator. Das stöchiometrische Verhältnis von Isocyanatgruppen in der ersten Komponente (A) zu in der Zusammensetzung enthaltenen isocyanat-reaktiven Wasserstoffatomen, insbesondere reaktiven Wasserstoffatomen des Di- und/oder Polyamins, in den zwei alternativen Komponenten (B) beträgt 7.5 bis 25, bevorzugt 10 bis 20, besonders bevorzugt 15.

Mittels eines solchen Systems (im Sinne einer geordneten Bereitstellung zur gemeinsamen Verwendung (kit-of-parts)) kann ein erfindungsgemässer Zwei-Komponenten-Klebstoff überraschend einfach und flexibel ausschliessliche über die anwendungsspezifisch, verbraucherseitig zu wählende Komponente B individualisiert bereitgestellt werden.

Die Erfindung wird nachfolgend anhand von Ausführungsbeispielen näher erläutert, ohne dass der Gegenstand der Erfindungen auf diese Ausführungsformen zu beschränken wäre.

Der Index (vgl. Tabellen 1 und 2) entspricht dem Verhältnis aus eingesetzter Mol-Menge an Isocyanat-Gruppen und theoretisch benötigter Mol-Menge an Isocyanat-Gruppen und definiert bei einem Wert >1 einen eingesetzten Mol-Überschuss an Isocyanat-Gruppen.

Zusammensetzung 1 ist eine nicht-erfindungsgemässe Klebstoffzusammensetzung basierend auf Polyurethan aus WO 2008/095915 A1. Sie weist bei einem Index von 1,004 und keiner Verwendung von Trimerisierungskatalysatoren schlagzähe Eigenschaften auf.

**Tabelle 1: Nicht erfindungsgemässe Zusammensetzung 1 aus WO 2008/095915 A1**

| **Zusammensetzung 1** | **Gew.-%** | **Komponente** | **Hersteller** |
|---|---|---|---|
| Jeffamine D-2000 | 8,5 Gew.-% | B | Huntsman |
| Jeffamine T-5000 | 1,5 Gew.-% | B | Huntsman |
| Unilink 4200 | 25,8 Gew.-% | B | Alfa |
| Härter DT | 3,9 Gew.-% | B | Bayer |
| Desmodur E23 | 60,32 Gew.-% | A | Bayer |
| Index | 1, 004 | | |
| Eigenschaften | Schlagzäh | | |

Im Folgenden sind Vergleiche von Vergleichsbeispielen (Zusammensetzungen 2 und 3) und erfindungsgemässen Zusammensetzungen (Zusammensetzungen 4 und 5) zusammengefasst. Verglichen wurden unterschiedliche Einsatzmengen von Jeffamine D-2000 und Jeffamine SD-401, TIB KAT K15, Polycat 43, Suprasec 2385, Desmodur E23 sowie Zusatz von Desmophen 4051 B, Tego Wet KL 245 und Siliporite SA/1720 in den Komponenten A und B.

Die Eigenschaften der Vergleichsbeispiele (Zusammensetzungen 2 und 3) und der erfindungsgemässen Zusammensetzungen (Zusammensetzungen 4 und 5) sind in der folgenden Tabelle gezeigt. Zusammensetzungen 2 und 3 sind nicht-erfindungsgemässe Zusammensetzungen. Zusammensetzungen 4 und 5 sind erfindungsgemässe Zusammensetzungen.

**Tabelle 2: Beispielhafte Zusammensetzungen (*kennzeichnet Vergleichsbeispiele)**

| **Zusammensetzung** | **2*** | **3*** | **4** | **5** | **Komponente** | **Hersteller** |
|---|---|---|---|---|---|---|
| Jeffamine D-2000 | | | 26,7% | 21,9% | B | Huntsman |
| Jeffamine SD-401 | 27% | 27.5% | | | B | Huntsman |
| Desmophen 4051 B | | | | 2,4% | B | Bayer |
| TIB KAT K15 | 0,5% | 0,6% | 1,1% | 1,0% | B | TIB Chemicals |
| Tego Wet KL 245 | | | | 1,0 | B | Evonik |
| Siliporit e SA/1720 | | | | 1,0% | B | Arkema |
| Polycat 43 | | | 0,3% | 0,3% | B | AirProducts |
| Suprasec 2385 | 72,4% | 36% | 36% | 36,2% | A | Huntsman |
| Desmodur E23 | | 36% | 36% | 36,2% | A | Bayer |
| Index | 5,1 | 3,7 | 14,9 | 15 | | |
| Eigenscha ften | Sehr spröde | Etwas spröde | Sehr schlag zäh | Sehr schlag zäh | | |

In der folgenden Tabelle sind das Elastizitätsmodul (E-Modul) und die maximale Zugspannung der erfindungsgemässen Zusammensetzung 5 bei steigenden Temperaturen dargestellt. Entsprechende Messwerte bei Raumtemperatur sind für die nicht-erfindungsgemässe Zusammensetzung 1 ebenfalls gezeigt, welche Werte von 71 % für das E-Modul und 58 % für die Max. Zugspannung der Werte der erfindungsgemässen Zusammensetzung 5 aufweisen. Eine Regression des E-Moduls und der maximalen Zugspannung bei steigenden Temperaturen ist für Zusammensetzung 1 bekannt (Daten nicht gezeigt).

**Tabelle 3: Zugprüfungen nach ISO 527-2**

| **Lagertemperatur** | **Zusammensetzung 1** | **Zusammensetzung 5** | **Zusammensetzung 1** | **Zusammensetzung 5** |
|---|---|---|---|---|
| | E-Modul [MPa] | | Max. Zugspannung [MPa] | |
| Raumtemperatur | 590 | 833 | 23,0 | 39,6 |
| 80°C | | 643 | | 30,5 |
| 120°C | | 209 | | 14,3 |
| 150°C | | 167 | | 14,1 |
| 180°C | | 209 | | 10,6 |

Die folgende Tabelle stellt die Zugscher-Eigenschaften der erfindungsgemässen Zusammensetzung 5 dar.

**Tabelle 4: Zugscherprüfungen nach ISO 4587:**

| **Zugscherfestigkeit Zusammensetzung 5 (Alu/Alu, 0.1 mm Fuge)** | |
|---|---|
| **Temperatur** | **Festigkeit [MPa]** |
| 20°C | 9,13 |
| 150°C | 5,58 |

Die erfindungsgemässen Zusammensetzungen 4 und 5 weisen bei einem Index von 14,9 und 15 hohe Schlagzähigkeit auf. Zudem sind für die erfindungsgemässe Zusammensetzung 5 verbesserte Zugfestigkeiten gezeigt. Auch bei Lagertemperaturen im Bereich von 80 bis 150 °C zeigt die Zusammensetzung vorteilhafte Eigenschaften.

## Patentansprüche

1. Zwei-Komponenten-Klebstoff umfassend eine erste Komponente (A) und eine zweite Komponente (B), wobei die erste Komponente (A) enthält:
- ein monomeres Polyisocyanat insbesondere monomeres Diisocyanat; und
- ein isocyanat-terminiertes Präpolymer und/oder ein Präpolymergemisch mit einer Isocyanatfunktionalität ≥ 1.7, bevorzugt im Bereich von 1.7 < f_{NCO} < 3, besonders bevorzugt im Bereich von 2 < f_{NCO} < 3;
wobei die zweite Komponente (B) enthält:
- ein Di- und/oder Polyamin, insbesondere ein Polyetherdiamin und/oder ein Polyetherpolyamin; und
- einen Trimerisierungskatalysator;
und wobei das stöchiometrische Verhältnis von Isocyanatgruppen in der ersten Komponente (A) zu in der Zusammensetzung enthaltenen isocyanat-reaktiven Wasserstoffatomen in der
zweiten Komponente (B) 7.5 bis 25, bevorzugt 10 bis 20, besonders bevorzugt 15, beträgt.

2. Zwei-Komponenten-Klebstoff nach Anspruch 1, **dadurch gekennzeichnet, dass** das isocyanat-terminierte Präpolymer und/oder das Präpolymergemisch bei Raumtemperatur flüssig oder pastös ist/sind.

3. Zwei-Komponenten-Klebstoff nach einem der Ansprüche 1 oder 2, **dadurch gekennzeichnet, dass** das Di- und/oder das Polyamin, insbesondere das Polyetherdiamin und/oder das Polyetherpolyamin, bei Raumtemperatur flüssig oder pastös ist/sind.

4. Zwei-Komponenten-Klebstoff nach einem der Ansprüche 1 bis 3, **dadurch gekennzeichnet, dass** die zweite Komponente (B) Polyole und/oder Additive umfasst.

5. Zwei-Komponenten-Klebstoff nach einem der Ansprüche 1 bis 4, **dadurch gekennzeichnet, dass** der Isocyanatgehalt des Präpolymers und/oder des Präpolymergemisches der ersten Komponente (A) 6-33 Gew.-%, bevorzugt 8-25 Gew.-%, beträgt.

6. Zwei-Komponenten-Klebstoff nach einem der Ansprüche 1 bis 5 **dadurch gekennzeichnet, dass** der Trimerisierungskatalysator ein Metallsalz einer Carbonsäure ist.

7. Zwei-Komponenten-Klebstoff nach einem der Ansprüche 1 bis 6, **dadurch gekennzeichnet dass** es sich bei dem isocyanat-terminierten Präpolymer und/oder Präpolymergemisch in der ersten Komponente (A) um ein Polyurethan- und/oder Polyharnstoff-Präpolymer handelt.

## Claims

1. Two-component adhesive comprising a first component (A) and a second component (B), where the first component (A) comprises:
- a monomeric polyisocyanate, in particular monomeric diisocyanate; and
- an isocyanate-terminated prepolymer and/or a prepolymer mixture with an isocyanate functionality ≥ 1.7, preferably in the range from 1.7 < f_{NCO} < 3, particularly preferably in the range from 2 < f_{NCO} < 3;
where the second component (B) comprises:
- a di- and/or polyamine, in particular a polyetherdiamine and/or a polyetherpolyamine; and
- a trimerization catalyst;
and where the stoichiometric ratio of isocyanate groups in the first component (A) to isocyanate-reactive hydrogen atoms present in the composition in the second component (B) is 7.5 to 25, preferably 10 to 20, particularly preferably 15.

2. Two-component adhesive according to Claim 1, **characterized in that** the isocyanate-terminated prepolymer and/or the prepolymer mixture is/are liquid or pasty at room temperature.

3. Two-component adhesive according to one of Claims 1 or 2, **characterized in that** the di-and/or the polyamine, in particular the polyetherdiamine and/or the polyetherpolyamine, is/are liquid or pasty at room temperature.

4. Two-component adhesive according to one of Claims 1 to 3, **characterized in that** the second component (B) comprises polyols and/or additives.

5. Two-component adhesive according to one of Claims 1 to 4, **characterized in that** the isocyanate content of the prepolymer and/or of the prepolymer mixture of the first component (A) is 6-33% by weight, preferably 8-25% by weight.

6. Two-component adhesive according to one of Claims 1 to 5, **characterized in that** the trimerization catalyst is a metal salt of a carboxylic acid.

7. Two-component adhesive according to one of Claims 1 to 6, **characterized in that** the isocyanate-terminated prepolymer and/or prepolymer mixture in the first component (A) is a polyurethane and/or polyurea prepolymer.

## Revendications

1. Adhésif bicomposant comprenant un premier composant (A) et un second composant (B), le premier composant (A) contenant :
- un polyisocyanate monomère, notamment un diisocyanate monomère ; et
- un prépolymère à terminaison isocyanate et/ou un mélange de prépolymères ayant une fonctionnalité isocyanate ≥ 1,7, de préférence dans la plage de 1,7 < f_{NCO} < 3, de manière particulièrement préférée dans la plage de 2 < f_{NCO} < 3 ;
le second composant (B) contenant :
- une di- et/ou polyamine, notamment une polyéther-diamine et/ou une polyéther-polyamine ; et
- un catalyseur de trimérisation ;
et le rapport stoechiométrique entre les groupes isocyanate dans le premier composant (A) et les atomes d'hydrogène réactifs avec les isocyanates contenus dans la composition dans le second composant (B) étant de 7,5 à 25, de préférence de 10 à 20, de manière particulièrement préférée de 15.

2. Adhésif bicomposant selon la revendication 1, **caractérisé en ce que** le prépolymère à terminaison isocyanate et/ou le mélange de prépolymères sont liquides ou pâteux à température ambiante.

3. Adhésif bicomposant selon l'une quelconque des revendications 1 ou 2, **caractérisé en ce que** la di-et/ou polyamine, notamment la polyéther-diamine et/ou la polyéther-polyamine, est liquide ou pâteuse à température ambiante.

4. Adhésif bicomposant selon l'une quelconque des revendications 1 à 3, **caractérisé en ce que** le second composant (B) comprend des polyols et/ou des additifs.

5. Adhésif bicomposant selon l'une quelconque des revendications 1 à 4, **caractérisé en ce que** la teneur en isocyanate du prépolymère et/ou du mélange de prépolymères du premier composant (A) est de 6 à 33 % en poids, de préférence de 8 à 25 % en poids.

6. Adhésif bicomposant selon l'une quelconque des revendications 1 à 5, **caractérisé en ce que** le catalyseur de trimérisation est un sel métallique d'un acide carboxylique.

7. Adhésif bicomposant selon l'une quelconque des revendications 1 à 6, **caractérisé en ce que** le prépolymère à terminaison isocyanate et/ou le mélange de prépolymères dans le premier composant (A) est un prépolymère de polyuréthane et/ou de polyurée.
